(19) Europäisches Patentamt
European Patent Office
Office européen des brevets

(11) **EP 3 166 236 B1**

(12) **EUROPÄISCHE PATENTSCHRIFT**

(45) Veröffentlichungstag und Bekanntmachung des Hinweises auf die Patenterteilung:
**15.12.2021   Patentblatt 2021/50**

(51) Int Cl.:
*H04B 10/114* (2013.01)

(21) Anmeldenummer: **16194991.2**

(22) Anmeldetag: **21.10.2016**

(54) **FÖRDEREINRICHTUNG**

TRANSPORT DEVICE

CONVOYEUR-TRANSPORTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2015   DE 102015221827**

(43) Veröffentlichungstag der Anmeldung:
**10.05.2017   Patentblatt 2017/19**

(73) Patentinhaber: **Pepperl + Fuchs GmbH**
**68307 Mannheim (DE)**

(72) Erfinder:
• **BRANDT, Sönke**
**10825 Berlin (DE)**
• **WETTENGEL, Ilja**
**12559 Berlin (DE)**
• **VOIGT, Michael**
**10585 Berlin (DE)**

• **STEINHÄUSER, Frank**
**12489 Berlin (DE)**

(74) Vertreter: **Fischer, Uwe**
**Patentanwalt**
**Moritzstraße 22**
**13597 Berlin (DE)**

(56) Entgegenhaltungen:
EP-A2- 1 631 790          DE-A1-102013 001 358
DE-T2- 60 016 933          DE-U1-202013 105 384
US-A1- 2005 129 410          US-A1- 2015 016 824

• **G 984.3 Telecom Standardization: "ITU-T Gigabit-capable Passive Optical Networks (G-PON): Transmission convergence layer specification", , 20. Juli 2004 (2004-07-20), XP055352329, Gefunden im Internet: URL:https://www.itu.int/rec/dologin_pub.as p?lang=e&id=T-REC-G.984.3-200402-S!!PDF-E& type=items [gefunden am 2017-03-07]**

EP 3 166 236 B1

**Beschreibung**

Die Erfindung bezieht sich auf Fördereinrichtungen und Verfahren zu deren Betrieb.

Die deutsche Patentschrift DE 44 35 056 B4 beschreibt - im Zusammenhang mit einem Verfahren und einer Vorrichtung zum Lagern von Waren - eine Fördereinrichtung, die verfahrbare Transporteinrichtungen in Form von sogenannten Förderern aufweist.

Die Offenlegungsschrift DE 10 2013 001 358 A1 beschreibt ein Verfahren zum Bestimmen der Position eines Fahrzeugs auf einer Ebene..

Die Druckschrift DE 600 16 933 T2 offenbart ein Positionsortungssystem zum Bestimmen der Position eines Mobilkommunikationsgeräts bzw. Mobilendgeräts und insbesondere ein System, das eine Zwei-Wege-Übertragung von Spread-Spektrum- bzw. Spreiz-Spektrum-Vermessungs- bzw. Ausbreitungssignalen zwischen dem Mobilkommunikationsgerät und Referenz- bzw. Bezugskommunikationsgeräten mit Uhren bzw. Zeitgebern relativ niedriger Genauigkeit verwendet, um schnell und genau die Position des Mobilkommunikationsgeräts in Anwesenheit von ernster bzw. starker Multipfad- bzw. Vielpfadinterferenz bzw. - störungen zu bestimmen.

Eine Fördereinrichtung mit den Merkmalen gemäß dem Oberbegriff des Patentanspruchs 1 ist in der deutschen Gebrauchsmusterschrift DE 20 2013 105 384 U1 offenbart.

Der Erfindung liegt die Aufgabe zugrunde, eine Fördereinrichtung anzugeben, die einen besonders sicheren Betrieb ermöglicht.

Diese Aufgabe wird erfindungsgemäß durch eine Fördereinrichtung mit den Merkmalen gemäß Patentanspruch 1 gelöst. Vorteilhafte Ausgestaltungen der erfindungsgemäßen Fördereinrichtung sind in Unteransprüchen angegeben.

Ein wesentlicher Vorteil der erfindungsgemäßen Fördereinrichtung ist darin zu sehen, dass über das optische Freistrahlkommunikationssystem sowohl Nutzdaten, beispielsweise zur Übersendung von Steuerbefehlen zwecks Steuerung der Fördereinrichtung, als auch Informationen zur Abstandsbestimmung übertragen werden können. Es ist somit in vorteilhafter Weise möglich, auf eine externe separate Abstandsbestimmung der verfahrbaren Transporteinrichtung zu verzichten und diese allein anhand der über das optische Freistrahlkommunikationssystem übertragenen Signale durchzuführen.

Der ermittelte Abstandswert kann beispielsweise zur Steuerung der Fördereinrichtung herangezogen werden; auch kann der ermittelte Abstandswert verwendet werden, um einen Bereich zwischen der verfahrbare Transporteinrichtung und dem anderen Abschnitt der Fördereinrichtung freizugeben, zum Beispiel für andere Fahrzeuge oder passierende Personen. Gerade mit Blick auf den letztgenannten Fall ist es wichtig, den Abstand möglichst genau und zeitnah zu ermitteln; ebendies kann die erfindungsgemäße Fördereinrichtung in vorteilhafter Weise durch die Heranziehung des optischen Freistrahlkommunikationssystems leisten.

Als vorteilhaft wird es angesehen, wenn die Steuereinheit der zweiten Sende- und Empfangseinheit derart ausgestaltet ist, dass sie mittels ihres Senders die Information, die Informationen, Teile der Information oder Teile der Informationen in ungenutzten Paketabschnitten der Nutzdatenpakete überträgt.

Alternativ kann die Steuereinheit der zweiten Sende- und Empfangseinheit derart ausgestaltet sein, dass sie mittels ihres Senders die Information, die Informationen, Teile der Information oder Teile der Informationen in separaten Informationspaketen überträgt, die zwischen Nutzdatenpaketen, insbesondere unmittelbar vor oder hinter Nutzdatenpaketen, gesendet werden.

Bezüglich der Ausgestaltung der Steuereinheit der zweiten Sende- und Empfangseinheit wird es als vorteilhaft angesehen, wenn diese ein Kommunikationsmodul zur Übermittlung der Nutzdatenpakete und ein Abstandsbestimmungsmodul aufweist.

Das Abstandsbestimmungsmodul der zweiten Sende- und Empfangseinheit ist bevorzugt derart ausgestaltet, dass es die Zeitspanne erfasst oder ermittelt, die zwischen dem Empfang eines von der ersten Sende- und Empfangseinheit gesendeten Datenpakets und dem darauf folgenden Wegsenden eines Datenpakets (z. B. Antwortpakets) zur ersten Sende- und Empfangseinheit vergangen ist oder vergehen wird, und die erfasste Zeitspanne als die Information oder eine der Informationen zu dem Kommunikationsmodul ihrer (also der zweiten) Sende- und Empfangseinheit übermittelt.

Das Kommunikationsmodul der zweiten Sende- und Empfangseinheit ist bevorzugt derart ausgestaltet, dass es die erfasste Zeitspanne als die Information oder eine der Informationen in ungenutzten Paketabschnitten der Nutzdatenpakete und/oder in separaten Informationspaketen zur ersten Sende- und Empfangseinheit übermittelt.

Die Steuereinheit der ersten Sende- und Empfangseinheit weist bevorzugt ein Abstandsbestimmungsmodul auf, das derart ausgestaltet ist, dass es die Gesamtzeitspanne erfasst, die zwischen dem Wegsenden des eigenen Datenpakets zur zweiten Sende- und Empfangseinheit und dem Empfang des von der zweiten Sende- und Empfangseinheit empfangenen Datenpakets vergeht, und den Abstand anhand der selbst erfassten Gesamtzeitspanne und der von der zweiten Sende- und Empfangseinheit erfassten und als Information empfangenen Zeitspanne ermittelt.

Besonders bevorzugt ist das Abstandsbestimmungsmodul der Steuereinheit der ersten Sende- und Empfangseinheit derart ausgestaltet, dass es den Abstand ermittelt gemäß:

$$S = v \cdot \frac{dT - dt}{2}$$

wobei dT die selbst erfasste Gesamtzeitspanne bezeichnet, wobei dt die von der zweiten Sende- und Empfangseinheit als Information empfangene Zeitspanne bezeichnet, wobei v die Ausbreitungsgeschwindigkeit der optischen Strahlung bezeichnet und wobei S den Abstand bezeichnet.

Die mindestens zwei Sende- und Empfangseinheiten, insbesondere deren Abstandsbestimmungsmodule, sind vorzugsweise jeweils derart ausgestaltet, dass sie sowohl als die eine als auch als die andere Sende- und Empfangseinheit bzw. sowohl als die erste als auch als die zweite Sende- und Empfangseinheit arbeiten können und beide Sende- und Empfangseinheiten jeweils für sich anhand einer empfangenen Information oder mehrerer empfangener Informationen der jeweils anderen Sende- und Empfangseinheit den räumlichen Abstand zwischen den beiden Sende- und Empfangseinheiten ermitteln können.

Die Steuereinheit weist bevorzugt eine Rechnereinrichtung und einen Speicher auf, in dem Softwaremodule gespeichert sind, von denen eines bei Ausführung durch die Rechnereinrichtung das Abstandsbestimmungsmodul und eines bei Ausführung durch die Steuereinheit das Kommunikationsmodul bildet.

Auch ist es vorteilhaft, wenn die Steuereinheiten der zwei Sende- und Empfangseinheiten jeweils derart ausgestaltet sind, dass sie ein Empfangssignal, insbesondere dessen Datenpakete oder zumindest eine vorgegebene Art von Datenpaketen, auf das Vorhandensein einer Gerätekennung, die die jeweils andere Sende- und Empfangseinheit identifiziert, überprüfen und das Empfangssignal, insbesondere das jeweilige Datenpaket, komplett oder in Teilen verwerfen, wenn in dem Empfangssignal bzw. dem jeweiligen Datenpaket keine die jeweils andere Sende- und Empfangseinheit identifizierende Gerätekennung enthalten ist. Ein Vorteil dieser Ausgestaltung besteht darin, dass bei dieser eine besonders sichere und fehlerfreie Übertragung von Daten bzw. Informationen möglich ist, weil nur Datenpakete mit korrekter Gerätekennung verwertet werden und andere verworfen werden können. Dies ist von besonderer Bedeutung, wenn - wie oben erwähnt - beispielsweise im Rahmen der Datenpakete Abstandsinformationen übertragen oder aus oder mit den Datenpaketen Abstandsinformationen, beispielsweise durch Taktflankenauswertung, gewonnen werden und anhand dieser Abstandsinformationen ein Bereich zwischen der verfahrbaren Transporteinrichtung und dem anderen Abschnitt der Fördereinrichtung freigegeben werden soll, zum Beispiel für andere Fahrzeuge oder passierende Personen.

Im Zusammenhang mit der Gerätekennung wird es als vorteilhaft angesehen, wenn die Steuereinheiten beider Sende- und Empfangseinheiten jeweils derart ausgestaltet sind, dass sie den räumlichen Abstand zwischen den beiden Sende- und Empfangseinheiten unter Heranziehung einer die Abstandsermittlung ermöglichenden oder diese unterstützenden Information oder mehrerer solcher Informationen ermitteln, die von der jeweils anderen Sende- und Empfangseinheit empfangen werden, und die Steuereinheiten außerdem jeweils derart ausgestaltet sind, dass sie ein empfangenes Datenpaket, das eine die Abstandsermittlung ermöglichende oder diese unterstützende Information aufweist, auf das Vorhandensein der Gerätekennung, die die jeweils andere Sende- und Empfangseinheit identifiziert, überprüfen und die in dem jeweiligen Datenpaket enthaltene Information zur Bestimmung des räumlichen Abstands ausschließlich dann heranziehen, wenn in dem jeweiligen Datenpaket die Gerätekennung enthalten ist, und andernfalls das Empfangssignal bei der Abstandsbestimmung unberücksichtigt lassen.

Vorzugsweise weisen die Steuereinheiten beider Sende- und Empfangseinheiten jeweils ein Abstandsbestimmungsmodul auf, das derart ausgestaltet ist, dass es den räumlichen Abstand zwischen den beiden Sende- und Empfangseinheiten unter Heranziehung einer Information oder mehrerer Informationen ermittelt, die von der jeweils anderen Sende- und Empfangseinheit empfangen werden.

Darüber hinaus weisen die Steuereinheiten beider Sende- und Empfangseinheiten vorzugsweise jeweils ein Verifizierungsmodul auf, das derart ausgestaltet ist, dass es ein empfangenes Datenpaket, das eine die Abstandsermittlung ermöglichende oder diese unterstützende Information aufweist, auf das Vorhandensein der Gerätekennung, die die jeweils andere Sende- und Empfangseinheit identifiziert, überprüft und die in dem Datenpaket enthaltene Information zur Bestimmung des räumlichen Abstandes ausschließlich dann für eine Auswertung durch das Abstandsbestimmungsmodul freigibt, wenn in dem Empfangssignal die die jeweils andere Sende- und Empfangseinheit identifizierende Gerätekennung enthalten ist, und andernfalls die Verwertung der Information blockiert.

Ein Prüfsummenkontrollmodul des Verifizierungsmoduls ist bevorzugt derart ausgestaltet, dass es bei einem zu prüfenden Datenpaket eine vorgegebene Prüfsummenkontrolle vornimmt und eine in dem Datenpaket enthaltene Information zur Bestimmung des räumlichen Abstandes ausschließlich dann für eine Auswertung durch das Abstandsbestimmungsmodul freigibt, wenn die Prüfsummenkontrolle die Fehlerfreiheit der empfangenen Gerätekennung bestätigt oder sich in der Gerätekennung enthaltene Fehler anhand der jeweiligen Prüfsumme korrigieren lassen, und andernfalls die Verwertung der Information blockiert.

Alternativ oder zusätzlich kann das Prüfsummenkontrollmodul auch derart ausgestaltet sein, dass es eine in dem Datenpaket enthaltene Information zur Bestimmung des räumlichen Abstands ausschließlich dann für eine Auswertung durch das Abstandsbestimmungsmodul freigibt, wenn die Prüfsummenkontrolle die Fehlerfreiheit der Information zur Bestimmung des räumlichen Abstands bestätigt oder sich festgestellte Fehler korrigieren lassen, und andernfalls die Verwertung der Information blockiert.

Die Steuereinheiten, insbesondere deren Prüfsummenkontrollmodule, sind vorzugsweise derart ausgestaltet, dass sie bei zu prüfenden Datenpaketen und/oder deren Abstandsinformationen eine zyklische Redundanzprüfung vornehmen.

Auch ist es vorteilhaft, wenn die Steuereinheiten, insbesondere deren Abstandsbestimmungsmodule, derart ausgestaltet sind, dass sie ermittelte Abstandswerte, die den räumlichen Abstand zwischen den beiden Sende- und Empfangseinheiten angeben, untereinander austauschen und vergleichen und im Falle, dass die Abweichung zwischen den selbst ermittelten, eigenen Abstandswerten und den von der jeweils anderen Sende- und Empfangseinheit empfangenen Abstandswerten eine vorgegebene maximale Differenz erreicht oder überschreitet, ein Fehlersignal erzeugen. Vor, während oder nach der Übertragung der Abstandswerte wird für diese vorzugsweise jeweils eine Prüfsumme gebildet, die zusammen mit den Abstandswerten oder getrennt von diesen zu der jeweils anderen Sende- und Empfangseinheit übermittelt wird, damit letztgenannte eine Kontrolle der Abstandswerte auf Fehlerfreiheit und ggf. eine Fehlerkorrektur vornehmen kann.

Darüber hinaus wird es als vorteilhaft angesehen, wenn die Sende- und Empfangseinheiten jeweils einen Datenpuffer umfassen und die Steuereinheiten jeweils derart ausgestaltet sind, dass sie für jedes Datenpaket oder zumindest für eine vorgegebene Art an Datenpaketen vor dem Versenden jeweils eine Pufferzeitspanne ermitteln, für die das jeweilige Datenpaket vor dem Versenden zu der jeweils anderen Sende- und Empfangseinheit zwischengespeichert werden soll, das Datenpaket für die jeweilige Pufferzeitspanne in dem Datenpuffer speichern und erst anschließend zu der jeweils anderen Sende- und Empfangseinheit übermitteln. Die Pufferzeitspannen werden bevorzugt jeweils derart ermittelt, dass diese einer vorgegebenen maximalen Pufferzeitspanne abzüglich der von der Steuereinheit prognostizierten Laufzeit des jeweiligen Datenpakets zu der jeweils anderen Sende- und Empfangseinheit entsprechen. Durch die Pufferung lässt sich erreichen, dass alle Datenpakete unabhängig oder zumindest weitgehend unabhängig von dem jeweiligen räumlichen Abstand zwischen den Sende- und Empfangseinheiten stets in demselben zeitlichen Abstand eintreffen und der "Pakettakt" bzw. die Paketrate abstandsunabhängig oder zumindest weitgehend abstandsunabhängig ist. Da der "Pakettakt" bzw. die Paketrate feststeht oder quasi feststeht, lässt sich die Verarbeitung der Datenpakete vereinfachen, weil das Eintreffen des jeweils nächsten Datenpakets erwartet werden kann. Auch lassen sich beispielsweise fremde oder verfälschte Datenpakete, die einen anderen Takt aufweisen bzw. zur Unzeit eintreffen, erkennen und verwerfen.

Mit Blick auf die Pufferung wird es als vorteilhaft angesehen, wenn die Steuereinheiten beider Sende- und Empfangseinheiten jeweils derart ausgestaltet sind, dass sie die räumliche Entfernung zwischen den beiden Sende- und Empfangseinheiten unter Bildung eines Abstandswerts ermitteln und unter Berücksichtigung dieses Abstandswerts die Laufzeit des jeweiligen Datenpakets prognostizieren.

Die Steuereinheiten beider Sende- und Empfangseinheiten weisen vorzugsweise jeweils ein Verzögerungsmodul auf, das für die zu sendenden Datenpakete oder zumindest für eine vorgegebene Art an Datenpaketen, insbesondere Nutzdatenpakete oder separate Informationspakete, jeweils eine Pufferzeitspanne ermittelt, für die das jeweilige Datenpaket vor dem Versenden zu der jeweils anderen Sende- und Empfangseinheit zwischengespeichert werden soll.

Bevorzugt ermittelt das Verzögerungsmodul die Pufferzeitspannen für jedes Datenpaket jeweils gemäß

$$PZS = PZSmax - tL,$$

wobei PZS die zu ermittelnde Pufferzeitspanne, PZSmax die vorgegebene maximale Pufferzeitspanne und tL die prognostizierte Laufzeit des jeweiligen Datenpakets zu der jeweils anderen Sende- und Empfangseinheit bezeichnet.

Auch ist es vorteilhaft, wenn das Verzögerungsmodul die prognostizierte Laufzeit anhand eines von einem Abstandsbestimmungsmodul ermittelten Abstands zwischen den beiden Sende- und Empfangseinheiten bestimmt gemäß:

$$tL = S / v$$

wobei v die Ausbreitungsgeschwindigkeit der optischen Strahlung, tL die prognostizierte Laufzeit tL und S den Abstand bezeichnet.

Vorzugsweise ist das Verzögerungsmodul derart ausgestaltet, dass es die vorgegebene maximale Pufferzeitspanne ermittelt in Abhängigkeit von einer vorgegebenen maximal zulässigen Entfernung Smax zwischen den Sende- und Empfangseinheiten gemäß:

$$PZSmax = Smax/v$$

wobei Smax die maximal zulässige Entfernung, PZSmax die vorgegebene maximale Pufferzeitspanne und v die Ausbreitungsgeschwindigkeit der optischen Strahlung bezeichnet.

Die Steuereinheiten beider Sende- und Empfangseinheiten weisen bevorzugt jeweils ein Verzögerungsspeicher auf, dessen Speichergröße mindestens so groß wie das Produkt aus der Datenrate auf der optischen Freistrahlkommunikationsverbindung und der maximalen Pufferzeitspanne ist. Bevorzugt gilt also:

$$SG \geq PSMmax * fd$$

wobei SG die Speichergröße des Verzögerungsspeichers, PZSmax die maximale Pufferzeitspanne und fd die Datenrate auf der optischen Freistrahlkommunikationsverbindung bezeichnet.

Die Fördereinrichtung bildet bevorzugt eine Hebeeinrichtung, einen Aufzug oder einen Kran.

Die verfahrbare Transporteinrichtung wird bevorzugt durch einen Verfahrwagen eines Lagers, insbesondere Regallagers, ein Hubelement einer Hebeeinrichtung oder eine Kabine oder ein verfahrbares Hebeelement eines Aufzugs gebildet.

Bei der verfahrbaren Transporteinrichtung handelt es sich bevorzugt um eine linear verfahrbare Transporteinrichtung.

Die Erfindung bezieht sich außerdem auf ein Verfahren zum Betreiben einer Fördereinrichtung.

Bezüglich eines solchen Verfahrens ist erfindungsgemäß vorgesehen, dass der räumliche Abstand zwischen einer verfahrbaren Transporteinrichtung der Fördereinrichtung und einem anderen, insbesondere ortsfesten, Abschnitt der Fördereinrichtung ermittelt wird, wobei mindestens zwei Sende- und Empfangseinheiten, die jeweils einen Sender, einen Empfänger und eine Steuereinheit umfassen und von denen eine an der verfahrbaren Transporteinrichtung und die andere an dem anderen Abschnitt befestigt ist, in einer optische Freistrahlkommunikationsverbindung betrieben werden und Nutzdatenpakete in einem vorgegebenen optischen Übertragungskanal übermittelt werden, wobei die Datenübertragungskapazität des Übertragungskanals größer bemessen ist als die zur Übertragung der Nutzdatenpakete erforderliche Mindestdatenübertragungskapazität und der Übertragungskanal somit einen freien Kanalbereich zur Verfügung stellt und zumindest eine (vorzugsweise beide) der Sende- und Empfangseinheiten - nachfolgend erste Sende- und Empfangseinheit genannt - den räumlichen Abstand zwischen den beiden Sende- und Empfangseinheiten unter Heranziehung einer Information oder mehrerer Informationen ermittelt, die in dem freien Kanalbereich von der jeweils anderen Sende- und Empfangseinheit - nachfolgend zweite Sende- und Empfangseinheit genannt - empfangen werden.

Bezüglich der Vorteile des Verfahrens sei auf die obigen Erläuterungen im Zusammenhang mit der erfindungsgemäßen Fördereinrichtung verwiesen, da die Vorteile der erfindungsgemäßen Fördereinrichtung denen des erfindungsgemäßen Verfahrens entsprechen.

Besonders vorteilhaft ist es, wenn die Steuereinheit der zweiten Sende- und Empfangseinheit die Zeitspanne erfasst oder ermittelt, die zwischen dem Empfang eines von der ersten Sende- und Empfangseinheit gesendeten Datenpakets und dem darauf folgenden Wegsenden eines Datenpakets (z. B. Antwortpakets) zur ersten Sende- und Empfangseinheit vergangen ist oder vergehen wird, und als die Information oder eine der Informationen die jeweils erfasste Zeitspanne zur ersten Sende- und Empfangseinheit übermittelt. Die Steuereinheit der zweiten Sende- und Empfangseinheit überträgt die Information oder Teile der Information bevorzugt in ungenutzten Paketabschnitten der Nutzdatenpakete und/oder in separaten Informationspaketen, die zwischen Nutzdatenpaketen, insbesondere unmittelbar vor oder hinter Nutzdatenpaketen, gesendet werden.

Vorzugsweise erfasst die Steuereinheit der ersten Sende- und Empfangseinheit die Gesamtzeitspanne, die zwischen dem Wegsenden eines eigenen Datenpakets zur zweiten Sende- und Empfangseinheit und dem Empfang eines von der zweiten Sende- und Empfangseinheit danach empfangenen Datenpakets (z. B. Antwortpakets) vergeht. Die Steuereinheit der ersten Sende- und Empfangseinheit ermittelt in diesem Falle vorzugsweise den Abstand anhand der selbst erfassten Gesamtzeitspanne und der von der zweiten Sende- und Empfangseinheit erfassten und als Information empfangenen Zeitspanne.

Mit Blick auf eine schnelle und einfache Abstandsermittlung wird es als vorteilhaft angesehen, wenn die Steuereinheit der ersten Sende- und Empfangseinheit den Abstand ermittelt gemäß:

$$S = v \cdot \frac{dT - dt}{2}$$

wobei dT die selbst erfasste Gesamtzeitspanne bezeichnet, wobei dt die von der zweiten Sende- und Empfangseinheit als Information empfangene Zeitspanne bezeichnet, wobei v die Ausbreitungsgeschwindigkeit der optischen Strahlung bezeichnet und wobei S den Abstand bezeichnet.

Die Erfindung wird nachfolgend anhand von Ausführungsbeispielen näher erläutert, dabei zeigen beispielhaft:

Figur 1    in einer vereinfachten schematischen Darstellung ein Ausführungsbeispiel für eine erfindungsgemäße Fördereinrichtung,

Figur 2    ein Ausführungsbeispiel für eine Steuereinrichtung für Sende- und Empfangseinheiten der Fördereinrichtung gemäß Figur 1,

Figuren 3-5    beispielhaft die Übermittlung von Datenpaketen zwischen den Sende- und Empfangseinheiten der Fördereinrichtung gemäß Figur 1 im zeitlichen Verlauf,

Figur 6    ein Ausführungsbeispiel für eine Abstandsbestimmung anhand von Informationen, die zwischen den Sende- und Empfangseinheiten der Fördereinrichtung gemäß Figur 1 übertragen werden, und

Figuren 7-8    beispielhaft die Bestimmung einer Abstandsänderung durch Schätzung von Flankenwechselzeitpunkten und Vergleich der geschätzten Flankenwechselzeitpunkte mit den tatsächlichen Flankenwechselzeitpunkten.

In den Figuren werden für identische oder vergleichbare Komponenten dieselben Bezugszeichen verwendet.

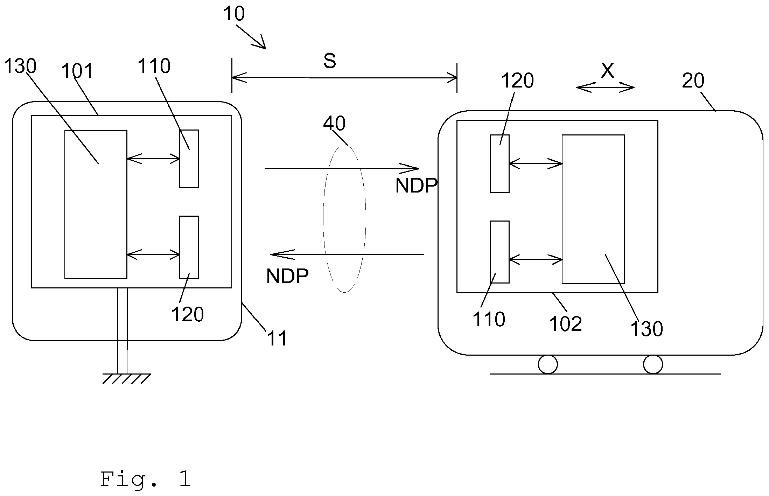

Die Figur 1 zeigt in einer vereinfachten schematischen Darstellung ein Ausführungsbeispiel für eine erfindungsgemäße Fördereinrichtung 10, bei der es sich beispielsweise um eine Hebeeinrichtung, einen Aufzug, einen Kran oder dergleichen handeln kann. Bei dem Ausführungsbeispiel gemäß Figur 1 bildet die Fördereinrichtung 10 einen Bestandteil eines automatisiert betriebenen Regallagers und umfasst unter anderem eine verfahrbare Transporteinrichtung 20, beispielsweise in Form eines linear entlang der Pfeilrichtung X verfahrbaren Verfahrwagens.

Die Fördereinrichtung 10 weist ein optisches Freistrahlkommunikationssystem 30 auf, das eine optische Freistrahlkommunikationsverbindung 40 zwischen der verfahrbaren Transporteinrichtung 20 und an einem anderen Abschnitt 11, beispielsweise ortsfesten Abschnitt oder einem anderen Verfahrwagen, der Fördereinrichtung 10 ermöglicht.

Das Freistrahlkommunikationssystem 30 umfasst eine an der verfahrbaren Transporteinrichtung 20 angebrachte erste Sende- und Empfangseinheit 101 und eine an dem anderen Abschnitt 11 der Fördereinrichtung 10 angebrachte zweite Sende- und Empfangseinheit 102. Die beiden Sende- und Empfangseinheiten 101 und 102 sind vorzugsweise baugleich und können demgemäß in identischer Weise betrieben werden. Die im Folgenden beispielhaft für die erste Sende- und Empfangseinheit 101 erläuterte Betriebsweise kann demgemäß in entsprechender Weise von der zweiten Sende- und Empfangseinheiten 102 ausgeführt werden, und umgekehrt.

Die beiden Sende- und Empfangseinheiten 101 und 102 umfassen jeweils einen Sender 110, einen Empfänger 120 und eine Steuereinheit 130 und stehen in der optischen Freistrahlkommunikationsverbindung 40 zum Zwecke einer Übertragung von Nutzdatenpaketen NDP.

Die Nutzdatenpakete NDP werden vorzugsweise in einem vorgegebenen optischen Übertragungskanal übermittelt. Als vorteilhaft wird es angesehen, wenn die Datenübertragungskapazität des Übertragungskanals größer bemessen ist als die zur Übertragung der Nutzdatenpakete NDP erforderliche MindestdatenÜbertragungskapazität, so dass der Übertragungskanal einen freien Kanalbereich zur Verfügung stellt. Im Falle einer solchen Auslegung der optische Freistrahlkommunikationsverbindung 40 ist es beispielsweise möglich, zusätzlich Informationen zu übertragen, die eine Bestimmung des Abstandes S bzw. der räumlichen Entfernung zwischen den beiden Sende- und Empfangseinheiten 101 und 102 ermöglichen.

Der Abstand S kann zur Steuerung der Fördereinrichtung 10 herangezogen werden, beispielsweise um einen Bereich zwischen der verfahrbare Transporteinrichtung 20 und dem anderen Abschnitt 11 der Fördereinrichtung 10 freizugeben, beispielsweise für andere Fahrzeuge oder passierender Personen. Es ist aus diesem Grunde wichtig, dass der Abstand S möglichst genau ermittelt und möglichst fehlerarm übertragen wird; denn eine fehlerhafte Abstandsangabe könnte einen Unfall hervorrufen.

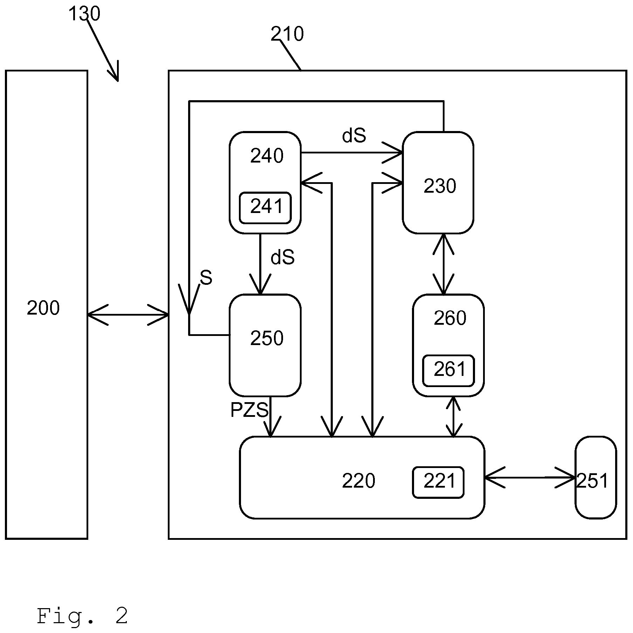

Die Figur 2 zeigt ein Ausführungsbeispiel für eine Steuereinheit 130, die in den beiden Sende- und Empfangseinheiten 101 und 102 gemäß Figur 1 eingesetzt werden kann.

Die Steuereinheit 130 umfasst eine Recheneinrichtung 200, bei der sich vorzugsweise um eine Mikroprozessoreinrichtung handelt, und einen Speicher 210. In dem Speicher 210 ist eine Vielzahl an Programmmodulen gespeichert, die von der Recheneinrichtung 200 ausgeführt werden können und bei Ausführung durch die Recheneinrichtung 200 vorzugsweise ein Kommunikationsmodul 220, ein Abstandsbestimmungsmodul 230, ein Abstandsänderungserkennungsmodul 240, ein Verzögerungsmodul 250 und ein Verifizierungsmodul 260 bilden.

Das Kommunikationsmodul 220 steht mit dem Sender 110 und dem Empfänger 120 in Verbindung und wickelt die optische Freistrahlkommunikationsverbindung 40 zwischen den beiden Sende- und Empfangseinheiten 101 und 102 ab.

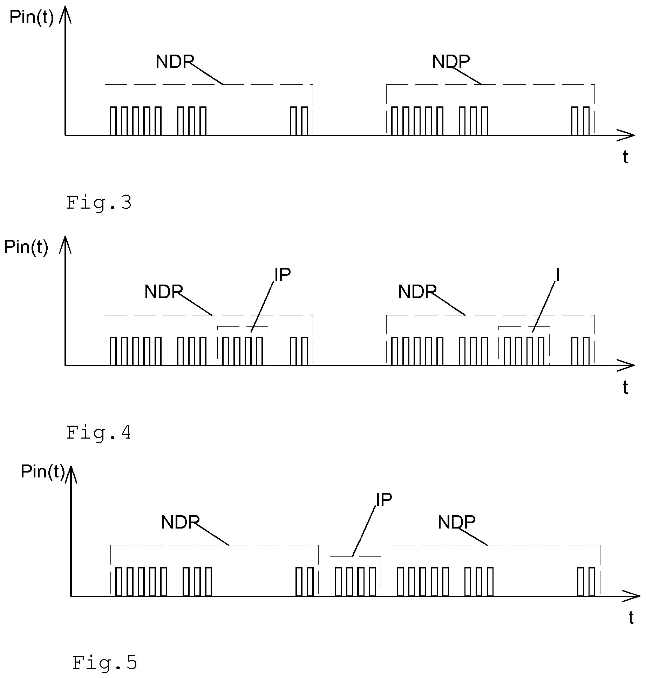

Die Figur 3 zeigt beispielhaft einen Strom an Nutzdatenpaketen NDP über der Zeit t, die von dem Kommunikationsmodul 220 zum Zwecke des Sendens erzeugt oder von dem Kommunikationsmodul 220 der jeweils anderen Sende- und Empfangseinheit empfangen werden können. In den Nutzdatenpaketen NDP können Prozessdaten und Steuerdaten zur Steuerung und zum Betrieb der Fördereinrichtung 10 übertragen werden.

Mit dem Kommunikationsmodul 220 steht das Abstandsbestimmungsmodul 230 in Verbindung. Die Aufgabe des Abstandsbestimmungsmoduls 230 besteht darin, Informationen I auszuwerten, die über die Freistrahlkommunikationsverbindung 40 zwischen den beiden Sende- und Empfangseinheiten übertragen werden und eine Abstandsbestimmung ermöglichen.

Die Informationen I können in ungenutzten Paketabschnitten der Nutzdatenpakete NDP übertragen werden, wie in der Figur 4 beispielhaft gezeigt ist, oder in separaten Informationspaketen IP, wie in der Figur 5 beispielhaft gezeigt ist.

Bei den Informationen I, die über die Freistrahlkommunikationsverbindung 40 übertragen werden, handelt es sich vorzugsweise um Zeitstempel.

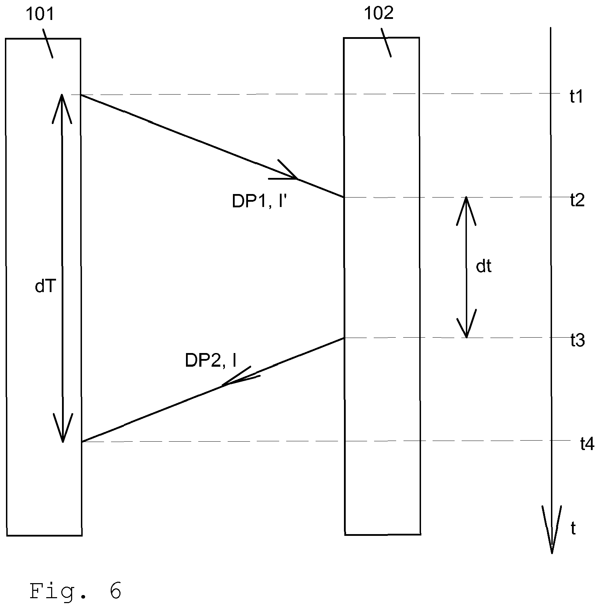

Im Zusammenhang mit Figuren 2 und 6 wird nachfolgend beispielhaft erläutert, wie anhand von empfangenen Zeitstempeln der zweiten Sende- und Empfangseinheit 102 die erste Sende- und Empfangseinheit 101 den Abstand S zur zweiten Sende- und Empfangseinheit 102 ermitteln kann:

Das Abstandsbestimmungsmodul 230 der ersten Sende- und Empfangseinheit 101 erfasst die Gesamtzeitspanne dT, die zwischen dem Wegsenden eines eigenen Datenpakets DP1 (z. B. Nutzdatenpaket oder separates Informationspaket) zur zweiten Sende- und Empfangseinheit 102 (siehe Zeitpunkt t1 in Figur 6) und dem nachfolgenden Empfang eines von der zweiten Sende- und Empfangseinheit 102 empfangenen Datenpakets DP2, nachfolgend auch Antwortdatenpaket genannt, vergeht (siehe Zeitpunkt t4 in Figur 6).

Das Abstandsbestimmungsmodul 230 der zweiten Sende- und Empfangseinheit 102 ermittelt die Zeitspanne dt, die zwischen dem Empfang des von der ersten Sende- und Empfangseinheit 101 gesendeten Datenpakets DP1 (siehe Zeitpunkt t2 in Figur 6) und dem darauf folgenden Wegsenden des Antwortdatenpakets (siehe Zeitpunkt t3 in Figur 6) zur ersten Sende- und Empfangseinheit 101 vergangen ist oder vergehen wird, und übermittelt diese erfasste Zeitspanne dt als Information I zu der ersten Sende- und Empfangseinheit 101. Die Zeitspanne dt wird durch Differenzbildung der Zeitpunkte t2 und t3 gebildet.

Anhand der Information I kann das Abstandsbestimmungsmodul 230 der ersten Sende- und Empfangseinheit 101 nun den Abstand ermitteln gemäß:

$$S = v \cdot \frac{dT - dt}{2}$$

- wobei dT die von der ersten Sende- und Empfangseinheit 101 selbst erfasste Gesamtzeitspanne bezeichnet,
- wobei dt die von der zweiten Sende- und Empfangseinheit 102 als Information I gesendete und von der ersten Sende- und Empfangseinheit 101 empfangene Zeitspanne bezeichnet,
- wobei v die Ausbreitungsgeschwindigkeit der optischen Strahlung bezeichnet und
- wobei S den Abstand bzw. einen absoluten Abstandsmesswert, der den Abstand zum Zeitpunkt t4 des Datenpaketempfangs in Figur 6 angibt, bezeichnet.

Um dem Abstandsbestimmungsmodul 230 der zweiten Sende- und Empfangseinheit 102 eine Abstandsbestimmung in identischer Weise zu ermöglichen, übermittelt das Abstandsbestimmungsmodul 230 der ersten Sende- und Empfangseinheit 101 ebenfalls jeweils die Zeitspanne (Information I'), die zwischen dem Empfang eines von der zweiten Sende- und Empfangseinheit 102 gesendeten Datenpakets (in Figur 6 nicht gezeigt) und dem darauf folgenden Wegsenden des Datenpakets DP1 zur zweiten Sende- und Empfangseinheit 102 vergangen ist oder vergehen wird. Anhand der empfangenen Information I' kann das Abstandsbestimmungsmodul 230 der zweiten Sende- und Empfangseinheit 102 den Abstand S in entsprechender oder identischer Weise errechnen, wie dies im Zusammenhang mit der ersten Sende- und Empfangseinheit 101 erläutert worden ist.

Die Abstandsbestimmungsmodule 230 der beiden Sende- und Empfangseinheiten ermöglichen somit eine regelmäßige absolute Messung des Abstandes S bzw. eine regelmäßige Bestimmung eines entsprechenden absolutes Abstandsmesswertes S zwischen den Sende- und Empfangseinheiten, und zwar entsprechend der zeitlichen Rate der übersendeten Datenpakete.

Die Abstandsbestimmungsmodule 230 der beiden Sende- und Empfangseinheiten tauschen vorzugsweise die von ihnen ermittelten Abstandswerte untereinander aus und vergleichen diese. Im Falle, dass die Abweichung zwischen den eigenen Abstandswerten und den von der jeweils anderen beiden Sende- und Empfangseinheit empfangenen Abstandswerte eine vorgegebene maximale Differenz erreicht oder überschreitet, erzeugen die Abstandsbestimmungsmodule 230 vorzugsweise ein Fehlersignal.

Um besonders schnell, und zwar insbesondere schneller als mit dem Abstandsbestimmungsmodul 230, eine Änderung des von dem Abstandsbestimmungsmodul 230 ermittelten Abstands S erkennen zu können, ist die Steuereinrichtung 130 gemäß Figur 2 mit dem Abstandsänderungserkennungsmodul 240 ausgestattet.

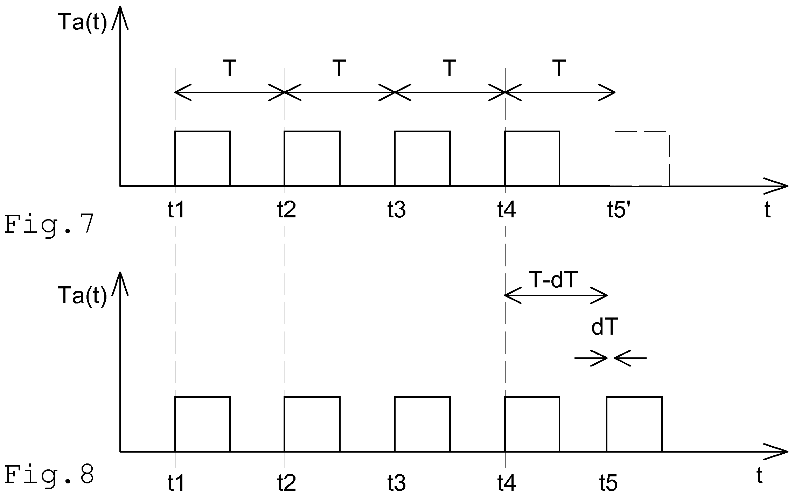

Das Abstandsänderungserkennungsmodul 240 steht mit dem Kommunikationsmodul 220 in Verbindung und erzeugt mit dem über die optische Freistrahlverbindung 40 empfangenen optischen Empfangssignal Pin(t), also mit dem Strom der eintreffenden Datenpakete (siehe Figuren 3 bis 5) ein Empfangstaktsignal Ta(t), das beispielhaft in der Figur 7 über der Zeit t gezeigt ist.

Anhand des Empfangstaktsignal Ta(t) kann das Abstandsänderungserkennungsmodul 240 die Zeitpunkte von ansteigenden und/oder abfallenden Flankenwechseln des Empfangstaktsignals über eine Vielzahl an Taktperioden zu erfassen. Bei dem Ausführungsbeispiel gemäß Figur 7 wird beispielhaft davon ausgegangen, dass das Abstandsänderungserkennungsmodul 240 jeweils die Zeitpunkte der ansteigenden Flankenwechsel auswertet; diese Zeitpunkte sind in der Figur 7 mit den Bezugzeichen t1 bis t4 gekennzeichnet.

Unter Heranziehung der Zeitpunkte t1 bis t4 in der Vergangenheit kann das Abstandsänderungserkennungsmodul 240 durch Mitteln die mittlere Periodenlänge T errechnen und mit der mittlere Periodenlänge T und dem Zeitpunkt des letzten Flankenwechsels den Zeitpunkt des jeweils nächsten Flankenwechsels unter Bildung eines geschätzten nachfolgenden Flankenwechselzeitpunkts t5' schätzen (siehe Figur 7) gemäß:

$$t5' = t4 + T$$

Anhand des geschätzten Flankenwechselzeitpunkts t5' und des tatsächlichen gemessenen Flankenwechselzeitpunkts t5 (siehe Figur 8) bzw. anhand der zeitlichen Differenz dT zwischen diesen Flankenwechselzeitpunkten kann die Änderung des Abstands S zwischen den Sende- und Empfangseinheiten 101 und 102 und ein entsprechender Abstandsänderungswert dS ermittelt werden gemäß:

$$dS = v \; dT = v \; (t5'-t5)$$

wobei v die Ausbreitungsgeschwindigkeit der optischen Strahlung bezeichnet.

Zur Bestimmung der zeitlichen Differenz dT kann das Abstandsänderungserkennungsmodul 240 einen Zählerbaustein 241 aufweisen, der jeweils bei ansteigender Flanke des aktuell erzeugten Empfangstaktsignals Ta(t) einen Zeitstempel in Form des jeweiligen Zählerstands erzeugt.

Die zeitliche Differenz dT zwischen dem geschätzten Flankenwechselzeitpunkt t5' und dem tatsächlichen Flankenwechselzeitpunkt t5 kann bei einer solchen Ausgestaltung anhand der Differenz zwischen dem geschätzten Zählerstand Zg beim geschätzten Flankenwechselzeitpunkt t5' und dem tatsächlichen Zählerstand Zt bei dem tatsächlichen Flankenwechselzeitpunkt t5 ermittelt werden gemäß:

$$dT = (Zg-Zt) \; / \; fT$$

wobei fT die Zählerrate bzw. die Zählertaktfrequenz bezeichnet.

Bei dem Ausführungsbeispiel gemäß den Figuren 7 und 8 wird das Abstandsänderungserkennungsmodul 240 also feststellen, dass sich der Abstand S zwischen den beiden Sende- und Empfangseinheiten 101 und 102 um den Abstandsänderungswert dS reduziert hat, da die Anstiegsflanke früher als prognostiziert eingetroffen ist.

Das Abstandsänderungserkennungsmodul 240 wird den Abstandsänderungswert dS vorzugsweise an das Abstandsbestimmungsmodul 230 übermitteln, das den zuvor ermittelten Abstandswert Sa entsprechend korrigieren wird und einen neuen Abstandswert S durch vorzeichenrichtige Addition mit dem Abstandsänderungswert dS (hier dS < 0) erzeugt gemäß:

$$S = Sa + dS$$

Die Abstandsbestimmungsmodule 230 der beiden Sende- und Empfangseinheiten können die korrigierten neuen Abstandswerte austauschen und vergleichen. Im Falle, dass die Abweichung zwischen den eigenen korrigierten Abstandswerten und den von der jeweils anderen Sende- und Empfangseinheit empfangenen korrigierten Abstandswerten eine vorgegebene maximale Differenz erreicht oder überschreitet, erzeugen die Abstandsbestimmungsmodule 230 vorzugsweise ein Fehlersignal.

Um erkennen zu können, ob die korrigierten neuen Abstandswerte tatsächlich von der jeweils anderen zugeordneten Sende- und Empfangseinheit stammen und/oder fehlerfrei übertragen worden sind, wird vorzugsweise mit bzw. von den korrigierten neuen Abstandswerten jeweils eine Prüfsumme gebildet und die Prüfsummen werden zusammen mit den korrigierten neuen Abstandsmesswerten an die jeweils andere Sende- und Empfangseinheiten übermittelt, damit letztere eine Prüfung der empfangenen Abstandsmesswerte auf Fehlerfreiheit bzw. korrekte Herkunft vornehmen kann. Zur sendeseitigen Bildung der Prüfsummen weisen die Kommunikationsmodule 220 vorzugsweise jeweils ein Prüfsummenbildungsmodul 221 auf.

Das oben im Zusammenhang mit der Figur 2 erwähnte Verzögerungsmodul 250 der Steuereinrichtung 130 steht vorzugsweise mit dem Kommunikationsmodul 220 und dem Abstandsbestimmungsmodul 230 in Verbindung.

Die Funktion des Verzögerungsmoduls 250 der Steuereinrichtung 130 besteht darin, für die zu sendenden Datenpakete, oder zumindest für eine vorgegebene Art an Datenpaketen wie beispielsweise die Nutzdatenpakete NDP oder die separaten Informationspakete IP gemäß den Figuren 2 bis 5, jeweils eine Pufferzeitspanne PTS ermitteln, für die das jeweilige Datenpaket vor dem Versenden zu der jeweils anderen Sende- und Empfangseinheit zwischengespeichert werden soll. Zum Zwischenspeichern der Datenpakete dient ein einen Datenpuffer bildender Verzögerungsspeicher 251 in Figur 2.

Die Pufferzeitspannen PZS werden für jedes Datenpaket jeweils derart ermittelt, dass diese einer vorgegebenen maximalen Pufferzeitspanne abzüglich der von dem Verzögerungsmodul 250 prognostizierten Laufzeit des jeweiligen Datenpakets zu der jeweils anderen Sende- und Empfangseinheit entsprechen. Mit anderen Worten soll also bevorzugt gelten:

$$PZS = PZSmax - tL,$$

wobei PZS die Pufferzeitspanne, PZSmax die vorgegebene maximale Pufferzeitspanne und tL die prognostizierte Laufzeit des jeweiligen Datenpakets zu der jeweils anderen Sende- und Empfangseinheit bezeichnet.

Zur Bestimmung der prognostizierten Laufzeit tL wertet das Verzögerungsmodul 250 vorzugsweise den von dem Abstandsbestimmungsmodul 230 ermittelten Abstand S zwischen den beiden Sende- und Empfangseinheiten 101 und 102 sowie den von dem Abstandsänderungserkennungsmodul 240 ermittelten Abstandsänderungswert dS aus und bestimmt die prognostizierte Laufzeit tL gemäß:

$$tL = Sk \; / \; v$$

wobei v die Ausbreitungsgeschwindigkeit der optischen Strahlung und Sk den um den Abstandsänderungswert dS des Abstandsänderungserkennungsmoduls 240 korrigierten Abstandswert S des Abstandsbestimmungsmoduls 230 (Sk = S + ds) bezeichnet.

Die vorgegebene maximale Pufferzeitspanne PZSmax wird vorzugsweise ermittelt in Abhängigkeit von der maximal möglichen bzw. zulässigen Entfernung Smax zwischen den Sende- und Empfangseinheiten 101 und 102. Vorzugsweise wird die maximale Pufferzeitspanne PZSmax ermittelt gemäß:

$$PZSmax = Smax/v$$

Die Speichergröße SG des Verzögerungsspeichers 251 ist bevorzugt derart gewählt, dass dieser für die maximale Pufferzeitspanne PZSmax Daten speichern kann. Im Falle einer Datenrate fd auf der optischen Freistrahlkommunikationsverbindung 40 ergibt sich die minimale Speichergröße SGmin wie folgt:

$$SG \geq SGmin = PSMmax * fd$$

Durch die Pufferung mittels des Verzögerungsmoduls 250 im Verzögerungsspeicher 251 wird erreicht, dass alle Datenpakete unabhängig von dem jeweiligen räumlichen Abstand zwischen den Sende- und Empfangseinheiten 101 und 102 stets in demselben zeitlichen Abstand eintreffen, und der "Pakettakt" bzw. die Paketrate abstandsunabhängig ist.

Das oben im Zusammenhang mit der Figur 2 erwähnte Verifizierungsmodul 260 der Steuereinrichtung 130 steht vorzugsweise mit dem Kommunikationsmodul 230 in Verbindung und überwacht das eingehende Empfangssignal Pin(t) und damit die mit dem Empfangssignal Pin(t) übertragenen Datenpakete oder eine vorgegebene Auswahl an Datenpaketen auf das Vorhandensein einer Gerätekennung, die die jeweils andere Sende- und Empfangseinheit 101 bzw. 102 eindeutig identifiziert.

Das Verifizierungsmodul 260 kann alle Datenpakete hinsichtlich der Gerätekennung überprüfen, also unabhängig davon, ob diese zur Abstandsbestimmung geeignete Abstands- oder Zeitstempelinformationen enthalten oder nicht, oder alternativ zur Entlastung ausschließlich Datenpakete mit Abstands- oder Zeitstempelinformationen. Beispielsweise in dem Falle, dass separate Informationspakete IP mit Abstands- oder Zeitstempelinformationen empfangen werden (siehe Figur 5), werden vorzugsweise ausschließlich die separaten Informationspakete IP auf die gültige Gerätekennung hin untersucht.

Vorzugsweise wird das Verifizierungsmodul 260 Datenpakete oder zumindest deren Informationen zur Bestimmung der räumlichen Entfernung zwischen den beiden Sende- und Empfangseinheiten 101 und 102 blockieren oder verwerfen, wenn keine korrekte, also keine die jeweils andere Sende- und Empfangseinheit 101 bzw. 102 eindeutig identifizierende, Gerätekennung aufgefunden wird.

Falls das Verifizierungsmodul 260 ausschließlich im Zusammenhang mit der Auswertung von Abstands- oder Zeitstempelinformationen herangezogen wird, ist es vorteilhaft, wenn das Verifizierungsmodul 260 mit dem Abstandsbestimmungsmodul 230 oder bevorzugt sogar ausschließlich mit dem Abstandsbestimmungsmodul 230 in Verbindung steht und eine Herkunfts- bzw. Gerätekennungsprüfung nur im Zusammenhang mit Datenpaketen durchführt, die wegen das Vorhandenseins von Abstands- oder Zeitstempelinformationen von dem Abstandsbestimmungsmodul 230 verwertet werden sollen.

Als besonders vorteilhaft wird es angesehen, wenn das Verifizierungsmodul 260 zur Verifizierung ein Prüfsummenkontrollmodul 261 aufweist.

Das Prüfsummenkontrollmodul 261 wertet eine in dem Empfangssignal Pin(t) (vgl. Figuren 3 bis 5), insbesondere in dem jeweils empfangenen Datenpaket, enthaltene Prüfsumme aus und untersucht diese auf Fehlerfreiheit der empfangenen Daten. Um eine solche Fehlerüberprüfung und ggf. sogar eine Fehlerkorrektur zu ermöglichen, übersenden die Kommunikationsmodule 220 der beiden Sende- und Empfangseinheiten 101 bzw. 102 eine Prüfsumme bevorzugt

- jeweils für jedes Datenpaket,
- jeweils für die im jeweiligen Datenpaket enthaltene Gerätekennung und/oder
- jeweils für die im jeweiligen Datenpaket enthaltene Abstands- oder Zeitstempelinformation.

Bei der Prüfsumme handelt es sich vorzugsweise um einen CRC-Code (zyklischer Redundanzprüfungscode).

Vorzugsweise wird das Prüfsummenkontrollmodul 261 im Rahmen der Fehlerprüfung in dem Empfangssignal Pin(t) enthaltene Abstands- oder Zeitstempelinformation ausschließlich dann zur Weiterverwendung und weiteren Auswertung (also Abstandsbestimmung) durch das Abstandsbestimmungsmodul 230 freigeben, wenn die Fehlerprüfung die Fehlerfreiheit der empfangenen Gerätekennung und/oder die Fehlerfreiheit der Abstands- oder Zeitstempelinformation bestätigt oder sich vorhandene Fehler korrigieren lassen. Andernfalls wird das Prüfsummenkontrollmodul 261 die Weiterverwendung und weitere Auswertung der fehlerhaften Datenpakete durch das Abstandsbestimmungsmodul 230 blockieren.

Das Prüfsummenkontrollmodul 261 ist vorzugsweise derart ausgestaltet, dass es CRC-Codes bearbeiten und eine Fehlerprüfung und Fehlerkorrektur im Rahmen einer zyklische Redundanzprüfung vornehmen kann.

Um sendeseitig entsprechende Prüfsummen in oder mit den Datenpaketen senden zu können, die von dem empfängerseitigen Prüfsummenkontrollmodul 261 ausgewertet werden können, weisen die Kommunikationsmodule 220 jeweils ein Prüfsummenbildungsmodul 221 auf. Das Prüfsummenbildungsmodul 221 bildet und versendet Prüfsummen bevorzugt

- jeweils für jedes Datenpaket,
- jeweils für die im jeweiligen Datenpaket enthaltene Gerätekennung und/oder
- jeweils für die im jeweiligen Datenpaket enthaltene Abstands- oder Zeitstempelinformation.

Obwohl die Erfindung im Detail durch bevorzugte Ausführungsbeispiele näher illustriert und beschrieben wurde, so ist die Erfindung nicht auf die offenbarten Beispiele beschränkt. Der Schutzbereich ist durch den Umfang der Ansprüche abgedeckt.

Bezugszeichen

| | |
|---|---|
| 10 | Fördereinrichtung |
| 11 | Abschnitt der Fördereinrichtung |
| 10 | erste Sende- und Empfangseinheit |
| 20 | verfahrbare Transporteinrichtung |
| 30 | Freistrahlkommunikationssystem |
| 40 | optische Freistrahlkommunikationsverbindung |
| 102 | zweite Sende- und Empfangseinheit |
| 110 | Sender |
| 120 | Empfänger |
| 130 | Steuereinheit |
| 200 | Recheneinrichtung |
| 210 | Speicher |
| 220 | Kommunikationsmodul |
| 221 | Prüfsummenbildungsmodul |
| 230 | Abstandsbestimmungsmodul |
| 240 | Abstandsänderungserkennungsmodul |
| 241 | Zählerbaustein |
| 250 | Verzögerungsmodul |
| 251 | Verzögerungsspeicher |
| 260 | Verifizierungsmodul |
| 261 | Prüfsummenkontrollmodul |

| | |
|---|---|
| dS | Abstandsänderungswert |
| dT, dt | Zeitspannen |
| DP1, DP2 | Datenpakete |
| I | Information |
| IP | Informationspaket |
| NDP | Nutzdatenpakete |
| Pin(t) | Empfangssignal |
| PZS | Pufferzeitspanne |
| S | Abstand/räumliche Entfernung |
| t | Zeit |
| t1-t5, t5' | Zeitpunkte |
| T | Periodenlänge |
| Ta(t) | Empfangstaktsignal |
| X | Pfeilrichtung |

**Patentansprüche**

1. Fördereinrichtung (10) mit mindestens einer verfahrbaren Transporteinrichtung (20),

   wobei

   - die Fördereinrichtung (10) ein optisches Freistrahlkommunikationssystem (30) aufweist mit mindestens zwei Sende- und Empfangseinheiten (101, 102), die jeweils einen Sender (110), einen Empfänger (120) und eine Steuereinheit (130) umfassen und von denen eine an der verfahrbaren Transporteinrichtung (20) und die andere an einem anderen Abschnitt (11) der Fördereinrichtung (10) befestigt ist, und
   - die mindestens zwei Sende- und Empfangseinheiten (101, 102) in einer optischen Freistrahlverbindung (40) stehen und eine Übermittlung von Nutzdatenpaketen untereinander in einem vorgegebenen optischen Übertragungskanal ermöglichen,

   wobei

   - die Datenübertragungskapazität des Übertragungskanals größer bemessen ist als die zur Übertragung der Nutzdatenpakete erforderliche Mindestdatenübertragungskapazität und der Übertragungskanal somit einen freien Kanalbereich zur Verfügung stellt und
   - die Steuereinheit (130) zumindest einer der, vorzugsweise beider, Sende- und Empfangseinheiten (101, 102), nachfolgend erste Sende- und Empfangseinheit (101, 102) genannt, geeignet ist, den räumlichen Abstand zwischen den beiden Sende- und Empfangseinheiten (101, 102) unter Heranziehung einer Information, zu ermitteln, die in dem freien Kanalbereich von der jeweils anderen Sende- und Empfangseinheit (101, 102), nachfolgend zweite Sende- und Empfangseinheit (101, 102) genannt, empfangen wird,.

   **dadurch gekennzeichnet, dass**

   - die Information eine Zeitspanne ist, die zwischen dem Empfang eines von der ersten Sende- und Empfangseinheit (101, 102) gesendeten und von der zweiten Sende- und Empfangseinheit (101, 102) empfangenen Datenpakets und dem darauf folgenden Wegsenden eines Datenpakets der zweiten Sende- und Empfangseinheit (101, 102) zur ersten Sende- und Empfangseinheit (101, 102) vergangen ist oder vergehen wird.

2. Fördereinrichtung (10) nach Anspruch 1,
**dadurch gekennzeichnet, dass**
die Steuereinheit (130) der anderen Sende- und Empfangseinheit (101, 102), nachfolgend zweite Sende- und Empfangseinheit (101, 102) genannt, derart ausgestaltet ist, dass sie mittels ihres Senders die Information in ungenutzten Paketabschnitten der Nutzdatenpakete überträgt.

3. Fördereinrichtung (10) nach einem der voranstehenden Ansprüche,
**dadurch gekennzeichnet, dass**
die Steuereinheit (130) der zweiten Sende- und Empfangseinheit (101, 102) derart ausgestaltet ist, dass sie mittels ihres Senders die Information in separaten Informationspaketen überträgt, die zwischen Nutzdatenpaketen, insbesondere unmittelbar vor oder hinter Nutzdatenpaketen, gesendet werden.

4. Fördereinrichtung (10) nach einem der voranstehenden Ansprüche,
**dadurch gekennzeichnet, dass**

- die Steuereinheit (130) der zweiten Sende- und Empfangseinheit (101, 102) ein Kommunikationsmodul (220) zur Übermittlung der Nutzdatenpakete und ein Abstandsbestimmungsmodul (230) aufweist,
- wobei das Abstandsbestimmungsmodul (230) derart ausgestaltet ist, dass es

  - die Zeitspanne erfasst oder ermittelt und
  - die erfasste Zeitspanne als die Information zu dem Kommunikationsmodul (220) übermittelt, und

- das Kommunikationsmodul (220) derart ausgestaltet ist, dass es die erfasste Zeitspanne als die Information in ungenutzten Paketabschnitten der Nutzdatenpakete und/oder in separaten Informationspaketen zur ersten Sende- und Empfangseinheit (101, 102) übermittelt.

5. Fördereinrichtung (10) nach einem der voranstehenden Ansprüche,
**dadurch gekennzeichnet, dass**
die Steuereinheit (130) der ersten Sende- und Empfangseinheit (101, 102) ein Abstandsbestimmungsmodul (230) aufweist, das derart ausgestaltet ist, dass es

- die Gesamtzeitspanne erfasst, die zwischen dem Wegsenden des eigenen Datenpakets zur zweiten Sende- und Empfangseinheit (101, 102) und dem Empfang des von der zweiten Sende- und Empfangseinheit (101, 102) empfangenen Datenpakets vergeht, und
- den Abstand anhand der selbst erfassten Gesamtzeitspanne und der von der zweiten Sende- und Empfangseinheit (101, 102) erfassten und als Information empfangenen Zeitspanne ermittelt.

6. Fördereinrichtung (10) nach einem der voranstehenden Ansprüche,
**dadurch gekennzeichnet, dass**
das Abstandsbestimmungsmodul (230) der Steuereinheit (130) der ersten Sende- und Empfangseinheit (101, 102) derart ausgestaltet ist, dass es den Abstand ermittelt gemäß:

$$S = v \cdot \frac{dT - dt}{2}$$

- wobei dT die selbst erfasste Gesamtzeitspanne bezeichnet,
- wobei dt die von der zweiten Sende- und Empfangseinheit (101, 102) als Information empfangene Zeitspanne bezeichnet,
- wobei v die Ausbreitungsgeschwindigkeit der optischen Strahlung bezeichnet und
- wobei S den Abstand bezeichnet.

7. Fördereinrichtung (10) nach einem der voranstehenden Ansprüche,
**dadurch gekennzeichnet, dass**
die mindestens zwei Sende- und Empfangseinheiten (101, 102), insbesondere deren Abstandsbestimmungsmodule, jeweils derart ausgestaltet sind, dass sie sowohl als die eine als auch als die andere Sende- und Empfangseinheit (101, 102) bzw. sowohl als die erste als auch als die zweite Sende- und Empfangseinheit (101, 102) arbeiten und beide Sende- und Empfangseinheiten (101, 102) jeweils für sich anhand einer empfangenen Information oder mehrerer empfangener Informationen der jeweils anderen Sende- und Empfangseinheit (101, 102) den räumlichen Abstand zwischen den beiden Sende- und Empfangseinheiten (101, 102) ermitteln.

8. Fördereinrichtung (10) nach einem der voranstehenden Ansprüche,
**dadurch gekennzeichnet, dass**
die verfahrbare Transporteinrichtung (20) eine linear verfahrbare Transporteinrichtung (20) ist.

9. Fördereinrichtung (10) nach einem der voranstehenden Ansprüche,
**dadurch gekennzeichnet, dass**

- die Fördereinrichtung (10) eine Hebeeinrichtung, einen Aufzug oder einen Kran bildet und/oder

- die verfahrbare Transporteinrichtung (20) ein Verfahrwagen eines Lagers, insbesondere Regallagers, ein Hubelement einer Hebeeinrichtung oder eine Kabine oder ein verfahrbares Hebeelement eines Aufzugs bildet.

10. Verfahren zum Betreiben einer Fördereinrichtung (10),
**dadurch gekennzeichnet, dass**

- der räumliche Abstand zwischen einer verfahrbaren Transporteinrichtung (20) der Fördereinrichtung (10) und einem anderen, insbesondere ortsfesten, Abschnitt (11) der Fördereinrichtung (10) ermittelt wird,
- wobei mindestens zwei Sende- und Empfangseinheiten (101, 102), die jeweils einen Sender (110), einen Empfänger (120) und eine Steuereinheit (130) umfassen und von denen eine an der verfahrbaren Transporteinrichtung (20) und die andere an dem anderen Abschnitt (11) befestigt ist, in einer optische Freistrahlkommunikationsverbindung betrieben werden und Nutzdatenpakete in einem vorgegebenen optischen Übertragungskanal übermittelt werden,
- wobei die Datenübertragungskapazität des Übertragungskanals größer bemessen ist als die zur Übertragung der Nutzdatenpakete erforderliche Mindestdatenübertragungskapazität und der Übertragungskanal somit einen freien Kanalbereich zur Verfügung stellt und
- wobei zumindest eine, vorzugsweise beide, Sende- und Empfangseinheiten (101, 102) jeweils den räumlichen Abstand zwischen den beiden Sende- und Empfangseinheiten (101, 102) unter Heranziehung einer Information ermitteln, die in dem freien Kanalbereich von der jeweils anderen Sende- und Empfangseinheit (101, 102) empfangen wird,

**dadurch gekennzeichnet, dass**

- die Information eine Zeitspanne ist, die zwischen dem Empfang eines von der einen Sende- und Empfangseinheit (101, 102) gesendeten und von der anderen Sende- und Empfangseinheit (101, 102) empfangenen Datenpakets und dem darauf folgenden Wegsenden eines Datenpakets der anderen Sende- und Empfangseinheit (101, 102) zu der einen Sende- und Empfangseinheit (101, 102) vergangen ist oder vergehen wird.

11. Verfahren nach Anspruch 10,
**dadurch gekennzeichnet, dass**

- die Steuereinheit (130) der anderen Sende- und Empfangseinheit (101, 102), nachfolgend zweite Sende- und Empfangseinheit (101, 102) genannt, die Zeitspanne erfasst oder ermittelt, die zwischen dem Empfang eines von der einen Sende- und Empfangseinheit (101, 102), nachfolgend erste Sende- und Empfangseinheit (101, 102) genannt, gesendeten Datenpakets und dem darauf folgenden Wegsenden eines Datenpakets zur ersten Sende- und Empfangseinheit (101, 102) vergangen ist oder vergehen wird, und
- die Steuereinheit (130) der zweiten Sende- und Empfangseinheit (101, 102) als die Information die jeweils erfasste Zeitspanne zur ersten Sende- und Empfangseinheit (101, 102) übermittelt,
- wobei die Steuereinheit (130) der zweiten Sende- und Empfangseinheit (101, 102) die Information in ungenutzten Paketabschnitten der Nutzdatenpakete und/oder in separaten Informationspaketen überträgt, die zwischen Nutzdatenpaketen, insbesondere unmittelbar vor oder hinter Nutzdatenpaketen, gesendet werden.

12. Verfahren nach einem der voranstehenden Ansprüche 10 bis 11,
**dadurch gekennzeichnet, dass**

- die Steuereinheit (130) der ersten Sende- und Empfangseinheit (101, 102) die Gesamtzeitspanne erfasst, die zwischen dem Wegsenden des eigenen Datenpakets zur zweiten Sende- und Empfangseinheit (101, 102) und dem Empfang des von der zweiten Sende- und Empfangseinheit (101, 102) danach empfangenen Datenpakets vergeht, und
- die Steuereinheit (130) der ersten Sende- und Empfangseinheit (101, 102) den Abstand anhand der selbst erfassten Gesamtzeitspanne und der von der zweiten Sende- und Empfangseinheit (101, 102) erfassten und als Information empfangenen Zeitspanne ermittelt.

13. Verfahren nach einem der voranstehenden Ansprüche 10 bis 12,
**dadurch gekennzeichnet, dass**
die Steuereinheit (130) der ersten Sende- und Empfangseinheit (101, 102) den Abstand ermittelt gemäß:

$$S = v \cdot \frac{dT - dt}{2}$$

- wobei dT die selbst erfasste Gesamtzeitspanne bezeichnet,
- wobei dt die von der zweiten Sende- und Empfangseinheit (101, 102) als Information empfangene Zeitspanne bezeichnet,
- wobei v die Ausbreitungsgeschwindigkeit der optischen Strahlung bezeichnet und
- wobei S den Abstand bezeichnet.

**Claims**

1. Conveying device (10) having at least one movable transport device (20),

   wherein

   - the conveying device (10) has an optical free-beam communication system (30) having at least two transmitting and receiving units (101, 102), which each comprise a transmitter (110), a receiver (120) and a control unit (130) and one of which is fastened to the movable transport device (20) and the other of which is fastened to another section (11) of the conveying device (10), and
   - the at least two transmitting and receiving units (101, 102) have an optical free-beam connection (40) and make it possible to transmit payload data packets between one another in a predefined optical transmission channel,

   wherein

   - the data transmission capacity of the transmission channel is greater than the minimum data transmission capacity needed to transmit the payload data packets and the transmission channel therefore provides a free channel region, and
   - the control unit (130) of at least one of the transmitting and receiving units (101, 102), preferably of both transmitting and receiving units, referred to as the first transmitting and receiving unit (101, 102) below, is suitable for determining the spatial distance between the two transmitting and receiving units (101, 102) using an item of information which is received in the free channel region from the respective other transmitting and receiving unit (101, 102), referred to as the second transmitting and receiving unit (101, 102) below,

   **characterized in that**

   - the information is a period of time which has elapsed or will elapse between the reception of a data packet transmitted by the first transmitting and receiving unit (101, 102) and received by the second transmitting and receiving unit (101, 102) and the subsequent transmission of a data packet from the second transmitting and receiving unit (101, 102) to the first transmitting and receiving unit (101, 102).

2. Conveying device (10) according to Claim 1, **characterized in that** the control unit (130) of the other transmitting and receiving unit (101, 102), referred to as the second transmitting and receiving unit (101, 102) below, is configured in such a manner that it uses its transmitter to transmit the information in unused packet sections of the payload data packets.

3. Conveying device (10) according to one of the preceding claims, **characterized in that** the control unit (130) of the second transmitting and receiving unit (101, 102) is configured in such a manner that it uses its transmitter to transmit the information in separate information packets which are transmitted between payload data packets, in particular immediately before or after payload data packets.

4. Conveying device (10) according to one of the preceding claims, **characterized in that**

   - the control unit (130) of the second transmitting and receiving unit (101, 102) has a communication module (220) for transmitting the payload data packets and a distance determination module (230),
   - wherein the distance determination module (230) is configured in such a manner that it

     - captures or determines the period of time and
     - transmits the captured period of time as the information to the communication module (220), and

   - the communication module (220) is configured in such a manner that it transmits the captured period of time as the information to the first transmitting and receiving unit (101, 102) in unused packet sections of the payload data packets and/or in separate information packets.

5. Conveying device (10) according to one of the preceding claims, **characterized in that** the control unit (130) of the first transmitting and receiving unit (101, 102) has a distance determination module (230) which is configured in such a manner that it

- captures the total period of time which elapses between the transmission of its own data packet to the second transmitting and receiving unit (101, 102) and the reception of the data packet received from the second transmitting and receiving unit (101, 102), and
- determines the distance on the basis of the self-captured total period of time and the period of time captured by the second transmitting and receiving unit (101, 102) and received as information.

**6.** Conveying device (10) according to one of the preceding claims,
**characterized in that**
the distance determination module (230) of the control unit (130) of the first transmitting and receiving unit (101, 102) is configured in such a manner that it determines the distance according to:

$$S = v \cdot \frac{dT - dt}{2}$$

- where dT denotes the self-captured total period of time,
- where dt denotes the period of time received from the second transmitting and receiving unit (101, 102) as information,
- where v denotes the propagation speed of the optical radiation, and
- where S denotes the distance.

**7.** Conveying device (10) according to one of the preceding claims,
**characterized in that**
the at least two transmitting and receiving units (101, 102), in particular their distance determination modules, are each configured in such a manner that they operate both as the one transmitting and receiving unit (101, 102) and as the other transmitting and receiving unit (101, 102) or both as the first transmitting and receiving unit (101, 102) and as the second transmitting and receiving unit (101, 102) and both transmitting and receiving units (101, 102) each separately determine the spatial distance between the two transmitting and receiving units (101, 102) on the basis of an item of received information or a plurality of items of received information from the respective other transmitting and receiving unit (101, 102).

**8.** Conveying device (10) according to one of the preceding claims,
**characterized in that**

the movable transport device (20) is a linearly movable transport device (20).

**9.** Conveying device (10) according to one of the preceding claims,
**characterized in that**

- the conveying device (10) forms a lifting device, a lift or a crane, and/or
- the movable transport device (20) forms a movement carriage of a warehouse, in particular a shelf warehouse, a lifting element of a lifting device or a car or a movable lifting element of a lift.

**10.** Method for operating a conveying device (10),
**characterized in that**

- the spatial distance between a movable transport device (20) of the conveying device (10) and another section (11), in particular a stationary section, of the conveying device (10) is determined,
- wherein at least two transmitting and receiving units (101, 102), which each comprise a transmitter (110), a receiver (120) and a control unit (130) and one of which is fastened to the movable transport device (20) and the other of which is fastened to the other section (11), are operated in an optical free-beam communication connection, and payload data packets are transmitted in a predefined optical transmission channel,
- wherein the data transmission capacity of the transmission channel is greater than the minimum data transmission capacity needed to transmit the payload data packets and the transmission channel therefore provides a free channel region, and
- wherein at least one transmitting and receiving unit (101, 102), preferably both transmitting and receiving units respectively determine(s) the spatial distance between the two transmitting and receiving units (101, 102) using an item of information which is received in the free channel region from the respective other transmitting and receiving unit (101, 102),

**characterized in that**

- the information is a period of time which has elapsed or will elapse between the reception of a data packet transmitted by the one transmitting and receiving unit (101, 102) and received by the other transmitting and receiving unit (101, 102) and the subsequent transmission of a data packet from the other transmitting and receiving unit (101, 102) to the one transmitting and receiving unit (101, 102).

11. Method according to Claim 10,
**characterized in that**

- the control unit (130) of the other transmitting and receiving unit (101, 102), referred to as the second transmitting and receiving unit (101, 102) below, captures or determines the period of time which has elapsed or will elapse between the reception of a data packet transmitted by the one transmitting and receiving unit (101, 102), referred to as the first transmitting and receiving unit (101, 102) below, and the subsequent transmission of a data packet to the first transmitting and receiving unit (101, 102), and
- the control unit (130) of the second transmitting and receiving unit (101, 102) transmits the respectively captured period of time to the first transmitting and receiving unit (101, 102) as the information,
- wherein the control unit (130) of the second transmitting and receiving unit (101, 102) transmits the information in unused packet sections of the payload data packets and/or in separate information packets which are transmitted between payload data packets, in particular immediately before or after payload data packets.

12. Method according to one of the preceding Claims 10 to 11,
**characterized in that**

- the control unit (130) of the first transmitting and receiving unit (101, 102) captures the total period of time which elapses between the transmission of its own data packet to the second transmitting and receiving unit (101, 102) and the reception of the data packet then received from the second transmitting and receiving unit (101, 102), and
- the control unit (130) of the first transmitting and receiving unit (101, 102) determines the distance on the basis of the self-captured total period of time and the period of time captured by the second transmitting and receiving unit (101, 102) and received as information.

13. Method according to one of the preceding Claims 10 to 12,
**characterized in that**
the control unit (130) of the first transmitting and receiving unit (101, 102) determines the distance according to:

$$S = v \cdot \frac{dT - dt}{2}$$

- where dT denotes the self-captured total period of time,
- where dt denotes the period of time received from the second transmitting and receiving unit (101, 102) as information,
- where v denotes the propagation speed of the optical radiation, and
- where S denotes the distance.

**Revendications**

1. Convoyeur (10) comprenant au moins un dispositif de transport déplaçable (20),

- le convoyeur (10) comportant un système de communication optique à faisceau libre (30) muni d'au moins deux unités d'émission et de réception (101, 102) qui comprennent chacune un émetteur (110), un récepteur (120) et une unité de commande (130) et dont l'une est fixée au dispositif de transport déplaçable (20) et l'autre à une autre portion (11) du convoyeur (10), et
- les au moins deux unités d'émission et de réception (101, 102) étant reliées par une liaison optique à faisceau libre (40) et permettant une transmission de paquets de données utiles sur un canal de transmission optique spécifié,
- la capacité de transmission de données du canal de transmission étant dimensionnée pour être supérieure à la capacité de transmission de données minimale requise pour transmettre les paquets de données utiles et le canal de transmission fournissant ainsi une zone de canal libre et
- l'unité de commande (130) d'au moins une des unités d'émission et de réception (101, 102), de préférence les deux, ci-après dénommée première unité d'émission et de réception (101, 102), étant adaptée pour déterminer la distance spatiale entre les deux unités d'émission et de réception (101, 102) à l'aide d'une information qui est reçue dans la zone de canal libre par l'autre unité d'émission et de réception respective (101, 102), ci-après dénommée deuxième unité d'émission et de réception (101, 102),

**caractérisé en ce que**

- l'information est un intervalle de temps qui s'est écoulé ou qui s'écoulera entre la réception d'un paquet de données envoyé par la première unité d'émission et de réception (101, 102) et reçu par la deuxième unité d'émission et de réception (101, 102) et l'émission subséquente d'un paquet de données de la deuxième unité d'émission et de réception (101, 102) à la première unité d'émission et de réception (101, 102).

**2.** Convoyeur (10) selon la revendication 1, **caractérisé en ce que**

l'unité de commande (130) de l'autre unité d'émission et de réception (101, 102), ci-après dénommée deuxième unité d'émission et de réception (101, 102), est conçue de manière à transmettre l'information dans le paquet en portions inutilisées des paquets de données utiles au moyen de son émetteur.

**3.** Convoyeur (10) selon l'une des revendications précédentes, **caractérisé en ce que**

l'unité de commande (130) de la deuxième unité d'émission et de réception (101, 102) est conçue de manière à transmettre au moyen de son émetteur l'information en paquets d'information séparés qui sont envoyés entre les paquets de données utiles, en particulier immédiatement avant ou après des paquets de données utiles.

**4.** Convoyeur (10) selon l'une des revendications précédentes, **caractérisé en ce que**

- l'unité de commande (130) de la deuxième unité d'émission et de réception (101, 102) comporte un module de communication (220), destiné à transmettre les paquets de données utiles, et un module de détermination de distance (230),
- le module de détermination de distance (230) est conçu de manière à

- détecter ou déterminer l'intervalle de temps et
- transmettre l'intervalle de temps détecté comme information au module de communication (220), et

- le module de communication (220) est conçu de manière à transmettre l'intervalle de temps détecté comme information en portions inutilisées des paquets de données utiles et/ou en paquets d'information séparés à la première unité d'émission et de réception (101, 102).

**5.** Convoyeur (10) selon l'une des revendications précédentes, **caractérisé en ce que**

l'unité de commande (130) de la première unité d'émission et de réception (101, 102) comporte un module de détermination de distance (230) qui est conçu de manière à

- détecter l'intervalle de temps total qui s'écoule entre l'émission de son propre paquet de données à la deuxième unité d'émission et de réception (101, 102) et la réception du paquet de données reçu par la deuxième unité d'émission et de réception (101, 102), et

- déterminer la distance à partir de l'intervalle de temps total auto-détecté et de l'intervalle de temps détecté par la deuxième unité d'émission et de réception (101, 102) et reçu comme information.

**6.** Convoyeur (10) selon l'une des revendications précédentes, **caractérisé en ce que**

le module de détermination de distance (230) de l'unité de commande (130) de la première unité d'émission et de réception (101, 102) est conçu de manière à déterminer la distance conformément à :

$$S = v \cdot \frac{dT - dt}{2}$$

- dT désignant l'intervalle de temps total auto-détecté,
- dt désignant l'intervalle de temps reçu comme information par la deuxième unité d'émission et de réception (101, 102),
- v désignant la vitesse de propagation du rayonnement optique et
- S désignant la distance.

**7.** Convoyeur (10) selon l'une des revendications précédentes, **caractérisé en ce que**

les au moins deux unités d'émission et de réception (101, 102), en particulier leurs modules de détermination de distance, sont chacune conçues de manière à fonctionner aussi bien l'une que l'autre comme unité d'émission et de réception (101, 102) ou aussi bien comme première que comme deuxième unité d'émission et de réception (101, 102) et les deux unités d'émission et de réception (101, 102) déterminent chacune en soi, sur la base d'une information reçue ou de plusieurs informations reçues de l'autre unité d'émission et de réception (101, 102), la distance spatiale déterminée entre les deux unités d'émission et de réception (101, 102).

**8.** Convoyeur (10) selon l'une des revendications précédentes, **caractérisé en ce que**

le dispositif de transport déplaçable (20) est un dispositif de transport (20) déplaçable linéairement.

**9.** Convoyeur (10) selon l'une des revendications précédentes, **caractérisé en ce que**

- le convoyeur (10) forme un dispositif de levage, un élévateur ou une grue et/ou

- le dispositif de transport déplaçable (20) forme un chariot d'un entrepôt, notamment d'un entrepôt à rayonnage, un élément de levage d'un dispositif de levage ou une cabine ou un élément de levage déplaçant d'un élévateur.

10. Procédé de fonctionnement d'un convoyeur (10), **caractérisé en ce que**

- la distance spatiale entre un dispositif de transport déplaçable (20) du convoyeur (10) et une autre portion (11), en particulier fixe, du convoyeur (10) est déterminée,
- au moins deux unités d'émission et de réception (101, 102), qui comprennent chacune un émetteur (110), un récepteur (120) et une unité de commande (130) et dont l'une est fixée au dispositif de transport déplaçable (20) et l'autre à l'autre portion (11), sont utilisées dans une liaison de communication optique à faisceau libre et des paquets de données utiles sont transmis sur un canal de transmission optique spécifié,
- la capacité de transmission de données du canal de transmission étant dimensionnée pour être supérieure à la capacité de transmission de données minimale requise pour transmettre les paquets de données utiles et le canal de transmission fournissant ainsi une zone de canal libre et
- au moins une unité d'émission et de réception (101, 102), de préférence les deux, déterminant chacune la distance spatiale entre les deux unités d'émission et de réception (101, 102) à l'aide d'une information qui est reçue par l'autre unité d'émission et de réception (101, 102) dans la zone de canal libre,

**caractérisé en ce que**

- l'information est un intervalle de temps qui s'est écoulé ou s'écoulera entre la réception d'un paquet de données envoyé par l'une des unités d'émission et de réception (101, 102) et reçu par l'autre unité d'émission et de réception (101, 102) et l'émission subséquente d'un paquet de données de l'autre unité d'émission et de réception (101, 102) à l'une des unités d'émission et de réception (101, 102).

11. Procédé selon la revendication 10, **caractérisé en ce que**

- l'unité de commande (130) de l'autre unité d'émission et de réception (101, 102), ci-après dénommée deuxième unité d'émission et de réception (101, 102), détecte ou détermine l'intervalle de temps qui s'est écoulé ou s'écoulera entre la réception d'un paquet de données envoyé par l'une des unités d'émission et de réception (101, 102), ci-après dénommée première unité d'émission et de réception (101, 102), et l'émission ultérieure d'un paquet de données vers la première unité d'émission et de réception (101, 102), et
- l'unité de commande (130) de la deuxième unité d'émission et de réception (101, 102) transmet l'intervalle de temps respectivement détecté à la première unité d'émission et de réception (101, 102) comme information,
- l'unité de commande (130) de la deuxième unité d'émission et de réception (101, 102) transmettant l'information en portions inutilisées des paquets de données utiles et/ou en paquets d'information séparés qui sont envoyés entre les paquets de données utiles, en particulier immédiatement avant ou après les paquets de données utiles.

12. Procédé selon l'une des revendications précédentes 10 et 11,
**caractérisé en ce que**

- l'unité de commande (130) de la première unité d'émission et de réception (101, 102) détecte l'intervalle de temps total qui s'écoule entre l'émission de son propre paquet de données à la deuxième unité d'émission et de réception (101, 102) et la réception du paquet de données reçu ensuite par la deuxième unité d'émission et de réception (101, 102), et
- l'unité de commande (130) de la première unité d'émission et de réception (101, 102) détermine la distance sur la base de l'intervalle de temps total auto-détecté et de l'intervalle de temps détecté par la deuxième unité d'émission et de réception (101, 102) et reçu comme information.

13. Procédé selon l'une des revendications précédentes 10 à 12,
**caractérisé en ce que**
l'unité de commande (130) de la première unité d'émission et de réception (101, 102) détermine la distance conformément à :

$$S = v \cdot \frac{dT - dt}{2}$$

- dT désignant l'intervalle de temps total auto-détecté,
- dt désignant l'intervalle de temps reçu comme information par la deuxième unité d'émission et de réception (101, 102),
- v désignant la vitesse de propagation du rayonnement optique et

**EP 3 166 236 B1**

- S désignant la distance.

Fig. 1

Fig. 2

EP 3 166 236 B1

Pin(t)

NDR          NDP

t

Fig.3

Pin(t)

NDR     IP          NDR     I

t

Fig.4

Pin(t)

NDR          IP     NDP

t

Fig.5

Fig. 6

Fig.7

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4435056 B4
- DE 102013001358 A1
- DE 60016933 T2
- DE 202013105384 U1